# EUROPÄISCHE PATENTANMELDUNG

(11) **EP 4 700 625 A1**
(43) Veröffentlichungstag der Anmeldung: **25.02.2026**
(21) Anmeldenummer: 24195798.4
(22) Anmeldetag: 22.08.2024
(51) Int. Cl.: G06F 21/60, G06F 21/62

(54) **ZULÄSSIGKEITSPRÜFUNG EINER DATEIÜBERLAGERUNG DURCH EIN OVERLAY-DATEISYSTEM**

(71) Anmelder: Siemens Aktiengesellschaft, 80333 München (DE)
(72) Erfinder: Falk, Rainer, 85435 Erding (DE); Feist, Christian Peter, 80689 München (DE); Hornung, Peter, 91054 Erlangen (DE); Schubert, Michael, 91161 Hilpoltstein (DE)
(74) Vertreter: Siemens Patent Attorneys

(57) **Zusammenfassung**

Die Erfindung betrifft ein Computer-implementiertes Verfahren, eine Computer-implementierte Vorrichtung, ein System und ein Computerprogrammprodukt zur Zugriffskontrolle auf ein erstes Dateisystem in einer aus zumindest N, mit N ≥ 4, angeordneten Dateisystemen bestehenden Umgebung, wobei zumindest zwei der N Dateisysteme in einer hierarchischen Anordnung zueinanderstehen, umfassend ein Bereitstellen eines Regelwerks, welches Informationen darüber vorhält, ob eine Datei des ersten Dateisystems durch ein oberhalb des ersten Dateisystems angeordnetes zweites und/oder drittes und/oder viertes Dateisystem modifiziert werden darf und ein Überprüfen, zumindest teilweise basierend auf einem Abgleich mit dem Regelwerk, ob eine Modifikation einer Datei des ersten Dateisystems durch das zweite und/oder das dritte und/oder das vierte Dateisystem ausgeführt werden darf.

## Beschreibung

In einigen Anwendungsfällen werden Betriebssysteme derart ausgeliefert, dass diese z.B. über eine CD/DVD gebootet werden können. Mit dem Bootvorgang einhergehen kann z.B. der Aufbau eines entsprechenden Dateisystems, welches, da der Bootvorgang von einer CD/DVD erfolgt, lediglich Read-Only sein kann. Diese Funktionseinschränkung, d.h. die Einschränkung, dass ein Benutzer lediglich lesend auf Betriebssystemdateien zugreifen kann, kann durch die Überlagerung des damit einhergehenden Basisdateisystems mittels eines Overlay-Dateisystems überwunden werden.

Ein Overlay-Dateisystem kann es ermöglichen, aus Sicht eines Anwendungsprogramms und/oder eines Benutzers ein Modifizieren, Ersetzen und/oder Löschen von Dateien in einem unterhalb des Overlay-Dateisystem angeordneten Basissystems vorzunehmen. Dies kann z.B. bei Linux-Distribution genutzt werden, welche z.B. von einer CD/DVD gebootet werden, eine Modifikation von Dateien vorzunehmen, obwohl diese auf einem Read-Only-Dateisystem auf CD/DVD vorliegen. Overlay-Dateisysteme finden häufig auch Anwendung bei auf Linuxbasierenden eingebetteten Systemen, bei denen ein Dateisystem in einem Flashspeicher abgelegt wird, das z.B. über ein Firmware-Update aktualisiert wird.

Overlay-Dateisysteme finden hingegen auch auf offenen Computer-Plattformen Verwendung, d.h. Plattformen, welche nicht auf proprietären Standards basieren. Hierbei kann häufig die Situation vorherrschend sein, dass sich einzelne (z.B. hierarchisch übereinander angeordnete) Dateisysteme unter Kontrolle verschiedener Stakeholder befinden. In einigen Fällen kann z.B. ein Read-Only-Dateisystem von einem Systemhersteller bereitgestellt werden, wohingegen unter der Kontrolle eines Benutzers des Systems (z.B. Maschinenbauer, Betreiber, etc.) Konfigurationsdaten, Anwendungen und/oder Logdaten in ein Overlay-Dateisystem geschrieben werden können. Solange eine präzise Kontrolle des Gesamtsystems erfolgt, kann eine Integrität des resultierenden Dateisystems gewahrt werden. Es kann jedoch nicht ausgeschlossen werden, dass bei einem Angriff oder einer Fehlfunktion nicht doch Daten des BasisDateisystems durch einen Anwender und/oder Angreifer in unzulässiger Weise modifiziert werden. Dies könnte z.B. dann der Fall sein, wenn Dateien modifiziert werden, die als Konfigurationsdateien für Systemdienste und nicht zur Änderung durch einen Anwender vorgesehen sind. Auch wenn ein Basisdateisystem (z.B. mittels SquashFS als Basisdateisystem) z.B. mittels eines dm-verity grundsätzlich Integritätsschutz genießt, kann ein ausreichender und erwünschter Integritätsschutz dennoch nicht in allen Anwendungsszenarien sichergestellt werden.

Diesbezüglich sind z.B. Mechanismen bekannt, den Zugriff auf Dateien zu regeln. So ist es z.B. möglich, über ein Mandatory Access Control System, z.B. SELinux, Zugriffsmöglichkeiten auf Dateien zu beschränken.

Ferner sind File Integrity Monitoring (FIM) Tools bekannt, um zur Laufzeit die Integrität von Dateien zu prüfen. Dies kann z.B. auch als Runtime Health Check (RHC) bezeichnet werden.

Das Konzept mehrere Dateisysteme zu Überlagern ist unter der Begrifflichkeit des Union Mount bekannt.

Aus der US 1 062 1101 B2 ist z.B. eine Überwachung von Schreibvorgängen in ein Overlay-Dateisystem bekannt, um ein Überlaufen des Overlay-Dateisystems fester Größe zu vermeiden, was zu einem unerwünschten Reboot eines Computer(systems) führen würde. Diese allgemeine Schreibfilter für eine Überwachung von Schreibvorgängen des Overlay-Dateisystem erkennt hingegen nicht, ob ein Schreibzugriff das überlagerte Dateisystem betrifft, da lediglich Modifikationen von Dateien im Overlay-Dateisystem überwacht werden.

Ferner ist aus der CN 1 144 612 90 A bekannt, dass das gleiche Overlay-Dateisystem von mehreren Instanzen (z.B. im Kontext einer Cloud-Infrastruktur) genutzt werden kann.

Es besteht daher ein Bedarf, die Robustheit einer Dateisystemüberlagerung zu verbessern.

Die vorliegende Erfindung stellt sich daher die technische Aufgabe, eine verbesserte Dateisystemüberlagerung bereitzustellen, welche insbesondere einen verbesserten Integritätsschutz ermöglicht.

Gemäß eines ersten Aspekts wird ein Computer-implementiertes Verfahren zur Zugriffskontrolle auf ein erstes Dateisystem in einer aus zumindest N, mit N ≥ 4, angeordneten Dateisystemen bestehenden Umgebung, wobei zumindest zwei der N Dateisysteme in einer hierarchischen Anordnung zueinanderstehen, vorgeschlagen. Das Computer-implementierte Verfahren kann ein Bereitstellen eines Regelwerks, welches Informationen darüber vorhält, ob eine Datei des ersten Dateisystems durch ein oberhalb des ersten Dateisystems angeordnetes zweites und/oder drittes und/oder viertes Dateisystem modifiziert werden darf, sowie ein Überprüfen, zumindest teilweise basierend auf einem Abgleich mit dem Regelwerk, ob eine Modifkation einer Datei des ersten Dateisystems durch das zweite und/oder das dritte und/oder das vierte Dateisystem ausgeführt werden darf, umfassen.

Unter einer hierarchischen Anordnung kann eine Anordnung der N Dateisysteme im Sinne einer Stapelanordnung verstanden werden, so dass das Dateisystem mit der höchsten Integritätsstufe (d.h. das erste Dateisystem) auf der untersten Stufe des Stapels angeordnet wird, während das zweite, das dritte und das vierte Dateisystem auf diesem und in dieser Reihenfolge aufbauen und damit von Stufe zu Stufe (optional) einer niedrigeren Integritätsstufe zugeordnet werden können. In einigen Fällen können zumindest zwei der Dateisysteme (z.B. das zweite und das dritte Dateisystem oder das dritte und das vierte Dateisystem) mit der gleichen Integritätsstufe assoziiert sein.

Unter Integrität kann vorliegend die Eigenschaft eines informationstechnischen Systems verstanden werden, eine Unversehrtheit von Daten sicherzustellen und somit vor einer unbemerkten Veränderung zu schützen. Je höher einer Integritätsstufe gewählt wird, umso bedeutender kann es angesehen werden, eine unerwünschte Änderung einer Datei des ersten Dateisystems zu unterbinden.

Das Regelwerk kann als eine Positivliste bereitgestellt werden, d.h. als eine Liste, welche diejenigen Dateien auflistet, welche durch das zweite, das dritte und/oder das vierte Dateisystem modifiziert werden dürfen. Alternativ kann das Regelwerk auch als eine Negativliste bereitgestellt werden, d.h. als eine Liste, welche diejenigen Dateien auflistet, welche durch das zweite, das dritte und/oder das vierte Dateisystem nicht modifiziert werden dürfen. Die jeweilige Auflistung der Dateien kann eine (vollständige) Auflistung eines jeweiligen Dateipfades der Dateien im ersten Dateisystem umfassen.

Das Überprüfen kann ein Abgleichen umfassen, ob die zu ändernde Datei in dem Regelwerk hinterlegt ist. Ist dies nicht der Fall, so kann als Standard die Datei als nicht-modifizierbar angesehen werden. Alternativ kann es auch möglich sein, die Datei als modifizierbar anzusehen, sollte diese im Regelwerk nicht aufgeführt sein.

In einigem Fällen kann das Überprüfen durch einen Benutzer initiiert werden. In einem derartigen Fall kann das Computer-implementierte Verfahren ferner ein Bereitstellen einer Benutzereingabe umfassen, welche mit dem Modifizieren einer Datei des ersten Dateisystems assoziiert ist (z.B. durch eine Benutzerschnittstelle).

Unter einer Modifikation kann vorliegend ein Bearbeiten bzw. Ändern einer Datei verstanden werden. Zusätzlich oder alternativ kann unter einer Modifikation ein Erstellen und/oder ein Löschen einer Datei verstanden werden. Unter Modifizieren einer Datei des ersten Dateisystems ist insbesondere zu verstehen, dass diese Datei durch eine Datei mit übereinstimmenden Dateinamen des zweiten, des dritten und/oder des vierten Dateisystems überlagert wird.

Auf diese Weise kann eine effiziente und leicht zu implementierende Integritätskontrolle bzgl. einer Dateimodifikation eines ersten Dateisystems durch ein zweites, ein drittes und/oder ein viertes Dateisystem ermöglicht werden. Dies kann zu einer verbesserten Datensicherheit der Daten, welche im ersten Dateisystem gespeichert werden, beitragen.

In einer Ausführungsform kann das erste Dateisystem ein ROOT-Dateisystem sein, bevorzugt ein Read-Only-Dateisystem.

Unter einem ROOT-Dateisystem kann vorliegend ein Dateisystem verstanden werden, welches durch ein Basissystem bereitgestellt wird. In einigen Fällen kann das ROOT-Dateisystem durch einen Hersteller der (Rechen)Vorrichtung, auf welchem das ROOT-Dateisystem zum Einsatz kommt, bereitgestellt werden. In einigen Fällen kann das ROOT-Dateisystem ein SquashFS-Dateisystem sein.

Ein Read-Only-Dateisystem kann als ein Dateisystem bereitgestellt werden, welches ausschließlich Lesezugriffe gestattet, d.h. keine Schreibzugriffe ermöglicht.

Auf diese Weise kann erfindungsgemäß das ROOT-Dateisystem, welches initial keine Dateimodifikationen erlaubt, gezielt um Modifikationsmöglichkeiten für ausgewählte Dateien erweitert werden.

Gemäß einer weiteren Ausführungsform kann das erste Dateisystem ein Overlay-Dateisystem, bevorzugt ein Read-Write-Dateisystem, sein.

Unter einem Overlay-Dateisystem kann ein Dateisystem verstanden werden, welches über ein bestehendes Dateisystem gelegt wird. Dies kann dazu führen, dass sich ein Dateisystem ergibt, welches sowohl das Overlay-Dateisystem als auch das bestehende Dateisystem zu einem Gesamtdateisystem zusammenfasst.

Ein Read-Write-Dateisystem kann als ein Dateisystem bereitgestellt werden, welches sowohl Lese- als auch Schreibzugriffe gestattet.

Auf diese Weise kann auch für ein Overlay-Dateisystem ein Zugriffsschutz bzw. ein Integritätsschutz hinsichtlich der Modifizierbarkeit ausgewählter Dateien ermöglicht werden.

Gemäß einer weiteren Ausführungsform kann das zweite und/oder das dritte und/oder das vierte Dateisystem ein Overlay-Dateisystem sein.

Dies kann insbesondere ermöglichen, ein erstes Dateisystem gezielt, um eine ausgewählte Funktionalität bzw. ausgewählte Zugriffsrechte zu erweitern.

Gemäß einer weiteren Ausführungsform kann das zweite Dateisystem unmittelbar oberhalb des ersten Dateisystems angeordnet sein.

Unter unmittelbar kann vorliegend eine derartige Anordnung der Dateisysteme verstanden werden, dass zwischen zwei betreffenden Dateisystemen (d.h. zwischen zwei unmittelbar nebeneinander angeordneten Dateisystemen) kein weiteres Dateisystem bereitgestellt ist.

Das zweite Dateisystem kann mit einer Integritätsstufe bereitgestellt werden, welche kleiner ist als die Integritätsstufe des ersten Dateisystems, d.h. eine unentdeckte und unerwünschte Modifkation einer Datei des ersten Dateisystems kann als schwerwiegender angesehen werden als eine unentdeckte und unerwünschte Modifikation einer Datei des zweiten Dateisystems.

Auf diese Weise kann ein kontrollierter und Integritäts-wahrender Dateizugriff auf das erste Dateisystem durch das zweite Dateisystem ermöglicht werden.

Gemäß einer weiteren Ausführungsform kann das vierte Dateisystem unmittelbar oberhalb des dritten Dateisystems angeordnet sein, wobei das dritte Dateisystem unmittelbar oberhalb des zweiten Dateisystems angeordnet sein kann und wobei das vierte Dateisystem über das dritte und das zweite Dateisystem auf das erste Dateisystem zugreifen kann.

Dies kann insbesondere ermöglichen, dass mehrere Zugriffsfilter (im Sinne eines Regelwerks) durchlaufen werden müssen, bevor das vierte Dateisystem (mit einer niedrigeren Integritätsstufe als das dritte Dateisystem und einer niedrigeren Integritätsstufe als das zweite Dateisystem und einer niedrigeren Integritätsstufe als das erste Dateisystem) auf das erste Dateisystem zugegriffen werden kann. Dies kann insbesondere zu einer effizienten Erhöhung des Integritätsschutzes des ersten Dateisystems beitragen.

In einigen Fällen kann auch vorgesehen sein, dass das dritte Dateisystem z.B. direkt auf das erste Dateisystem zugreifen kann und/oder dass das vierte Dateisystem direkt auf das erste Dateisystem zugreifen kann.

Gemäß einer weiteren Ausführungsform kann das Bereitstellen des Regelwerks ein Bereitstellen des Regelwerks als ein Dateiattribut der Datei im ersten Dateisystem, als Konfigurationsdatei und/oder als Datenbank umfassen.

Unter einem Dateiattribut kann vorliegend eine zusätzliche Angabe über eine Datei verstanden werden, die über den Inhalt der Datei selbst hinausgehen kann. Dateiattribute können als Metadaten verstanden werden. Die betreffenden Dateiattribute können derart angegeben werden, dass diese angeben, durch welches Dateisystem eine Modifikation der betreffenden Datei gestattet ist.

Die Konfigurationsdatei kann z.B. im ersten Dateisystem vorgehalten werden und durch das Dateisystem, welches einen Zugriff auf das erste Dateisystem ausführen möchte, aufgerufen werden. Zusätzlich oder alternativ kann die Konfigurationsdatei so bereitgestellt werden, dass nur das erste Dateisystem exklusiv Zugriff auf die Konfigurationsdatei hat. In diesem Fall kann das erste Dateisystem bei einem versuchten Zugriff durch das zweite, dritte oder vierte Dateisystem zunächst die Konfigurationsdatei aufrufen und überprüfen, ob ein Zugriff durch das entsprechende Dateisystem und/oder auf die betreffende Datei im Sinne des Regelwerks gestattet ist.

Die Datenbank kann durch das erste, das zweite, das dritte und/oder das vierte Dateisystem umfasst sein. Alternativ kann die Datenbank von den Dateisystem getrennt (z.B. auf einer entfernten Einheit) vorgehalten werden.

In einigen Fällen kann eine Entscheidung, ob eine Modifikation einer Datei erfolgen darf, auch zumindest teilweise basierend auf dem Inhalt der Datei erfolgen (z.B. wenn es sich bei der Datei um eine Binärdatei handelt, kann z.B. ein Zugriff verboten werden und/oder wenn es sich bei der Datei um eine Konfigurationsdatei handelt kann der Zugriff verboten werden).

Dies kann ein effizientes Bereitstellen sowie eine effiziente Wartung des Regelwerks ermöglichen und damit insgesamt eine effiziente Wartung eines Integritätsschutzes für Dateien des ersten Dateisystems ermöglichen.

Gemäß einer weiteren Ausführungsform kann das Computer-implementierte Verfahren ferner ein Ausgeben einer Alarmmeldung an einen Benutzer der Umgebung umfassen, bevorzugt über eine Benutzerschnittstelle, wenn festgestellt wird, dass die Modifikation der Datei nicht ausgeführt werden darf. Zusätzlich oder alternativ kann das Computer-implementierte Verfahren ferner ein Abweisen des oberhalb des ersten Dateisystem angeordneten zweiten und/oder dritten und/oder vierten Dateisystems umfassen, wenn festgestellt wird, dass die Modifikation der Datei nicht ausgeführt werden darf.

Die Alarmmeldung kann z.B. als Warnhinweis auf einer Benutzerschnittstelle (z.B. auf einem Display) erfolgen. Zusätzlich oder alternativ kann der Warnhinweis auch akustisch bereitgestellt werden. Zusätzlich oder alternativ ist es möglich, dass der Warnhinweis einem Systemadministrator per E-Mail und/oder Push-Mitteilung (z.B. auf ein Mobiltelefon, Tablet, etc.) zugestellt wird.

Das Abweisen des ersten Dateisystems kann ein Unmounten des abgewiesenen Dateisystems umfassen. Das Abweisen des Dateisystems kann ein Sperren des Dateisystems, von welchem der als unbefugt anzusehende Zugriff initiiert wurde, für potenziell zukünftige Zugriffe umfassen.

Auf diese Weise kann ein effizienter Integritätsschutz der Dateien des ersten Dateisystems unterstützt werden und ein Systemadministrator mit in einen potenziell unbefugten Modifikationszugriff auf das erste Dateisystem eingebunden werden. Auf diese Weise kann ein schnelleres Ergreifen von Gegenmaßnahmen ermöglicht werden.

Gemäß einer weiteren Ausführungsform kann das erste Dateisystem ein ROOT-Dateisystem sein, wobei das zweite Dateisystem ein home-Dateisystem sein kann, wobei das dritte Dateisystem ein Original Equipment Manufacturer, OEM, -Dateisystem sein kann und wobei das vierte Dateisystem ein Benutzer-Dateisystem sein kann.

Ein home-Dateisystem kann als ein Read-Write-Dateisystem verstanden werden, welches z.B. ein "home"-Verzeichnis für einen Benutzer der (Rechen)Vorrichtung und/oder eines Systems, welches die (Rechen)Vorrichtung umfasst, auf welchem das zweite Dateisystem ausgeführt wird, umfassen. Das "home"-Verzeichnis kann eine Speicherallokation für persönliche bzw. mit dem Benutzer assoziierte Daten umfassen.

Ein OEM-Hersteller kann vorliegend als ein Hersteller einer Industrieanlage verstanden werden, (z.B. ein Robotersystem, ein Förderbandsystem, etc.), welches aufbauend auf einer (konventionellen Rechen)Vorrichtung zusätzlich ein Steuermittel der Industrieanlage (z.B. als Steuersoftware) vorsieht. Dieses Steuermittel kann sowohl eine dedizierte Steueranwendung (z.B. App) und/oder sonstige mit der Steuerung assoziierte Daten umfassen (z.B. Konfigurationsdateien).

Das Benutzerdateisystem kann ein Dateisystem sein, welches von einem Endanwender/Benutzer z.B. einer Industrieanlage (d.h. einem Betreiber oder Integrator) verwaltet und genutzt wird. Dies kann mit gezielt auf die mit der Industrieanlage zugeschnittenen Anwendungen assoziiert sein, d.h. das Benutzerdateisystem kann dedizierte Konfigurationsdateien vorhalten, die die Industrieanlage letztlich dazu veranlassen können, einen Prozess (z.B. einen Fertigungsprozess) so auszuführen, wie vom Endanwender angedacht.

Gemäß einer weiteren Ausführungsform kann das Regelwerk durch einen OEM-Anbieter und/oder durch einen Benutzer festgelegt sein.

Wird das Regelwerk durch den OEM-Anbieter festgelegt, so kann herstellerseitig festgelegt werden, welche Dateien, z.B. des OEM-Dateisystems, durch z.B. ein Benutzer-Dateisystem modifiziert werden dürfen. Da der OEM-Anbieter in der Regel eine tiefgehende Kenntnis über das OEM-Dateisystem hat, kann auf diese Weise ein optimierter Integritätsschutz der Dateien des OEM-Dateisystems bereitgestellt werden. Zusätzlich oder alternativ kann es auch möglich sein, dass der OEM-Anbieter das Regelwerk für einen Zugriff auf Dateisysteme einer höheren Integritätsstufe definieren kann. So kann es dem OEM-Anbieter z.B. ermöglicht werden, ein Regelwerk für Zugriffe auf das erste Dateisystem und/und oder das zweite Dateisystem und/oder das dritte Dateisystem und/oder das vierte Dateisystem zu definieren.

Unter einem Benutzer kann vorliegend ein Implementierer einer Industrieanlage verstanden werden, welcher z.B. die Industrieanlage von einem OEM-Anbieter erworben hat.

Somit kann eine Anpassung des Regelwerks gezielt durch diejenigen Interessensgruppen erfolgen, welche jeweils bestmögliche Kenntnis über solche Daten haben, welche einem besonderen Integritätsschutz bedürfen bzw. deren unentdeckte und unerwünschte Modifikation zu einem erhöhten Datensicherheitsrisiko führen kann.

Gemäß einer weiteren Ausführungsform kann das Computer-implementierte Verfahren ferner ein Überprüfen des Inhalts des zweiten und/oder des dritten und/oder des vierten Dateisystems umfassen, wenn das entsprechende zweite und/oder dritte und/oder vierte Dateisystem ein Overlay-Dateisystem ist. Das Überprüfen kann bei einem Mount-Prozess und/oder einer Aktualisierung des entsprechenden zweiten und/oder dritten und/oder vierten Dateisystems erfolgen. Dabei wird bereits beim Mounten überprüft, ob das zu mountende Overlay-Dateisystem eine Datei umfasst, die eine Datei des ersten Dateisystems unzulässigerweise überlagern würde. Ein unzulässiges Überlagern wird dabei schon beim Mounten und nicht erst bei einem späteren Dateizugriff erkannt. Weiterhin ist möglich, dass, soweit eine Überlagerung einer Datei des ersten Dateisystems durch eine Datei des zweiten und/oder des dritten und/oder des vierten Dateisystems grundsätzlich zulässig, den Dateiinhalt der überlagernden Datei des zweiten und/oder des dritten und/oder des vierten Dateisystems zu prüfen. Dabei kann beispielsweise geprüft werden, dass es sich bei der überlagernden Datei um eine Datei gleichen Dateityps handelt (z.B. Erkennbar an den ersten Bytes des Dateiinhalts). Weiterhin kann beispielsweise geprüft werden, ob die Dateigröße der überlagernden Datei sich in einem zulässigen Bereich befindet. Weiterhin kann geprüft werden, ob der Dateiinhalt bestimmte Vorgaben einhält, z.B. ob er unzulässige Sonderzeichen aufweist. Weiterhin können Attribute der überlagernden Datei geprüft werden, insbesondere die in den Dateiattributen des zweiten und/oder des dritten und/oder des vierten Dateisystems der überlagernden Datei zugeordneten Zugriffsrechte, der Eigentümer und/oder die Gruppenzugehörigkeit der Datei. Dabei kann in einer Variante geprüft werden, ob diese Dateiattribute mit den korrespondierenden Attributen der überlagerten Datei des ersten Dateisystems übereinstimmen.

Dies kann den Vorteil bieten, dass auf konventionelle Overlay-Dateisystemimplementierungen wie z.B. OverlayFS oder UnionFS zurückgegriffen werden kann.

Gemäß eines zweiten Aspekts wird ein Computerprogrammprodukt vorgeschlagen, umfassend Befehle, die bei der Ausführung des Programms durch einen Computer diesen veranlassen, das Verfahren wie hierin beschreiben auszuführen.

Ein Computerprogrammprodukt, wie z.B. ein Computerprogramm-Mittel, kann beispielsweise als Speichermedium, wie z.B. Speicherkarte, USB-Stick, CD-ROM, DVD, oder auch in Form einer herunterladbaren Datei von einem Server in einem Netzwerk bereitgestellt oder geliefert werden. Dies kann zum Beispiel in einem drahtlosen Kommunikationsnetzwerk durch die Übertragung einer entsprechenden Datei mit dem Computerprogrammprodukt oder dem Computerprogramm-Mittel erfolgen.

Gemäß eines dritten Aspekts wird eine Computer-implementierte Vorrichtung zur Zugriffskontrolle auf ein erstes Dateisystem in einer aus zumindest N, mit N ≥ 4, hierarchisch übereinander angeordneten Dateisystemen bestehenden Umgebung vorgeschlagen. Die Computer-implementierte Vorrichtung kann eine Bereitstellungseinheit zum Bereitstellen eines Regelwerks umfassen, welches Informationen darüber vorhält, ob eine Datei des ersten Dateisystems durch ein oberhalb des ersten Dateisystems angeordnetes zweites und/oder drittes und/oder viertes Dateisystem modifiziert werden darf. Ferner kann die Computer-implementierte Vorrichtung eine Überprüfungseinheit zum Überprüfen umfassen, zumindest teilweise basierend auf einem Abgleich mit dem Regelwerk, ob eine Modifikation einer Datei des ersten Dateisystems durch das zweite und/oder das dritte und/oder das vierte Dateisystem ausgeführt werden darf.

Die jeweilige Einheit, zum Beispiel Bereitstellungseinheit oder Überprüfungseinheit, kann hardwaretechnisch und/oder auch softwaretechnisch implementiert sein. Bei einer hardwaretechnischen Implementierung kann die jeweilige Einheit als Vorrichtung oder als Teil einer Vorrichtung, zum Beispiel als Computer oder als Mikroprozessor oder als Steuerrechner eines Fahrzeuges ausgebildet sein. Bei einer softwaretechnischen Implementierung kann die jeweilige Einheit als Computerprogrammprodukt, als eine Funktion, als eine Routine, als Teil eines Programmcodes oder als ausführbares Objekt ausgebildet sein

Gemäß einer Ausführungsform kann die Computer-implementierte Vorrichtung ferner eine Ausführungseinheit zum Ausführen der Verfahrensschritte des Verfahrens umfassen wie hierin beschrieben. Zusätzlich oder alternativ kann die Computer-implementierte Vorrichtung eine weitere Ausführungseinheit zum Ausführen des Computerprogrammprodukts, wie hierin beschrieben, umfassen.

Die Ausführungseinheit kann z.B. als Computer, Prozessor, Field Programmable Gate Array (FPGA) oder eine Kombination davon vorgesehen sein.

Gemäß eines vierten Aspekts wird ein System zur Zugriffskontrolle auf ein erstes Dateisystem in einer aus zumindest N, mit N ≥ 4, hierarchisch übereinander angeordneten Dateisystemen bestehenden Umgebung vorgeschlagen. Das System kann das Computerprogrammprodukt wie hierin beschrieben sowie die Computer-implementierte Vorrichtung, wie hierin beschrieben, umfassen.

Die für die vorgeschlagene Vorrichtung beschriebenen Ausführungsformen und Merkmale gelten für das vorgeschlagene Verfahren entsprechend und umgekehrt.

Weitere mögliche Implementierungen der Erfindung umfassen auch nicht explizit genannte Kombinationen von zuvor oder im Folgenden bezüglich der Ausführungsbeispiele beschriebenen Merkmale oder Ausführungsformen. Dabei wird der Fachmann auch Einzelaspekte als Verbesserungen oder Ergänzungen zu der jeweiligen Grundform der Erfindung hinzufügen.

Weitere vorteilhafte Ausgestaltungen und Aspekte der Erfindung sind Gegenstand der Unteransprüche sowie der im Folgenden beschriebenen Ausführungsbeispiele der Erfindung. Im Weiteren wird die Erfindung anhand von bevorzugten Ausführungsformen unter Bezugnahme auf die beigelegten Figuren näher erläutert.
- Fig. 1: zeigt ein exemplarisches Partitionslayout;
- Fig. 2: zeigt eine schematische Industrieanlage;
- Fig. 3: zeigt ein Ablaufdiagramm eines Computer-implementierten Verfahrens;
- Fig. 4: zeigt eine Computer-implementierte Vorrichtung; und
- Fig. 5: zeigt ein System.

In den Figuren sind gleiche oder funktionsgleiche Elemente mit denselben Bezugszeichen versehen worden, sofern nichts anderes angegeben ist.

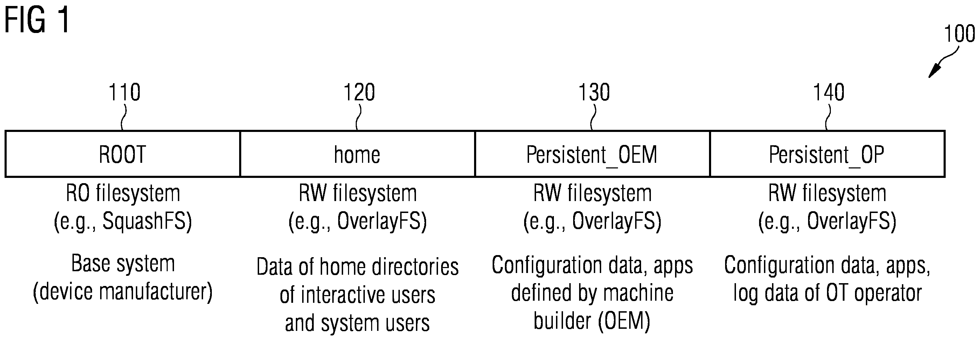

Fig. 1 zeigt ein exemplarisches Partitionslayout 100 mehrerer überlagerter Dateisysteme. Ein derartiges Partitionslayout wird hierin auch als Umgebung bezeichnet.

Vorliegend umfasst das Partitionslayout 100 ein ROOT-Dateisystem 110. Das ROOT-Dateisystem 110 kann als ein erstes Dateisystem fungieren. Das ROOT-Dateisystem 110 kann als ein read-only-Dateisystem (z.B. SquashFS) bereitgestellt werden. Es kann als ein Basissystem verstanden werden, welches Basisfunktionen (z.B. mit einem Dateisystem assoziierte Betriebssystemfunktionen) bereitstellt. Das ROOT-Dateisystem 110 kann von einem Hersteller einer (Rechen)Vorrichtung, wie z.B. einem Computer, bereitgestellt und auch vorkonfiguriert werden. Dies bedeutet, ein Hersteller der jeweiligen (Rechen)Vorrichtung kann bereits ein Regelwerk bereitstellen, welches festlegt, welche Dateien des ersten Dateisystems durch ein auf dem ersten Dateisystem aufbauendes Dateisystem modifiziert werden dürfen.

Auf dem ROOT-Dateisystem 110 aufbauend kann ein home-Dateisystem 120 bereitgestellt werden. Das home-Dateisystem 120 kann als ein read-write-Dateisystem (z.B. ein OverlayFS) bereitgestellt werden. Das home-Dateisystem 120 kann das ROOT-Dateisystem 110 vollständig enthalten bzw. überdecken und eine Funktionalität des ROOT-Dateisystems 110 dadurch erweitern. Das home-Dateisystem 120 kann als ein zweites Dateisystem fungieren. Das home-Dateisystem 120 kann dabei Daten eines home-Verzeichnisses welches mit einem Benutzer assoziiert ist vorhalten. Das home-Dateisystem 120 kann interaktiv mit einem Benutzer agieren.

Auf dem home-Dateisystem 120 kann ein OEM-Dateisystem 130 aufbauen. Das OEM-Dateisystem 130 kann als ein read-write-Dateisystem (z.B. als ein OverlayFS) bereitgestellt werden. Das OEM-Dateisystem 130 kann bei der Herstellung von z.B. einer Industrieanlage, auf welcher es eingesetzt werden soll, durch den OEM bereitgestellt und vorkonfiguriert werden. Es kann Konfigurationsdateien, dedizierte für das Anwendungsgebiete optimierte Anwendungen enthalten, wie durch den OEM definiert.

Das OEM-Dateisystem 130 kann Persistenz-wahrend bereitgestellt werden, d.h. das OEM-Dateisystem 130 kann Dateien für den Betrieb einer Industrieanlage derart bereitstellen, dass diese auch noch nach einem Neustart eines Computers bzw. der Industrieanlage zur Verfügung stehen. Somit kann eine zuverlässige Speicherung von z.B. Konfigurationsdateien über einen längeren Zeitraum hinweg ermöglicht werden.

Auf dem OEM-Dateisystem 130 aufbauend kann ein Benutzerdateisystem 140 bereitgestellt werden. Das Benutzerdateisystem 140 kann als ein viertes Dateisystem 140 fungieren. Das Benutzerdateisystem 140 kann als ein read-write-Dateisystem (z.B. OverlayFS) bereitgestellt werden. Es kann insbesondere Dateien, Anwendungen und/oder Log-Dateien umfassen, welche direkt mit einem Benutzer (d.h. eines Implementierers) der Industrieanlage assoziiert ist. So können z.B. die Log-Dateien dazu verwendet werden, eine Betriebszustand des Partitionslayouts 100 zu überwachen, d.h. zu überwachen, ob ggf. ein nicht-authorisierter Zugriff auf eines der Dateisystem 110-140 erfolgt ist. Zusätzlich oder alternativ kann das Benutzerdateisystem 140 auch einen Systemzustand der Industrieanlage protokollieren.

Weiterhin ist möglich, dass das Partitionslayout 100 mehrerer überlagerter Dateisysteme in Form eines Virtuellen-Maschinen-Abbildes (Virtual Machine Image) oder in Form eines Container-Abbilds (Container Image) zur Ausführung durch ein virtualisiertes Computersystem vorliegt.

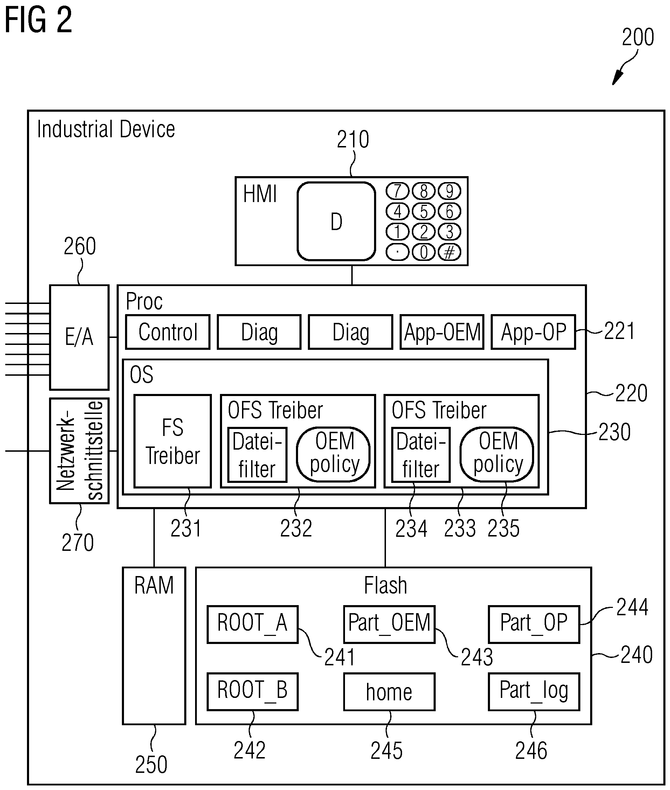

Fig. 2 zeigt schematisch eine Industrieanlage 200.

Industrieanlage 200 umfasst ein Human-Machine-Interface (Mensch-Computer-Schnittstelle) 210, welches eine Wechselwirkung der Industrieanlage 200 mit einem Benutzer der Industrieanlage 200 ermöglicht. Das Human-Machine-Interface 210 kann als eine Benutzerschnittstelle wie z.B. ein Display, ein Tablet, eine Anwendung, etc. bereitgestellt werden und eine Interaktion des Benutzers mit der Industrieanlage 200 ermöglichen.

Industrieanlage 200 kann ferner eine Verarbeitungseinheit 220 umfassen. Die Verarbeitungseinheit 220 kann eine Vielzahl von Verarbeitungssubeinheiten 221, wie z.B. Kontrollfunktionen, Dialogsysteme (zur Interaktion mit einem Benutzer), OEM-Anwendungen, Benutzeranwendungen, etc. umfassen. Ferner kann die Verarbeitungseinheit 220 ein Betriebssystem 230 umfassen.

Betriebssystem 222 kann hingegen einen Dateisystemtreiber 231 umfassen. Dateisystemtreiber 231 kann den Aufbau einer Dateisystemstruktur, z.B. beim Bootvorgang der Industrieanlage 200, unterstützen.

Das Betriebssystem 222 kann ferner einen ersten Overlay-Dateisystemtreiber 232 sowie einen zweiten Overlay-Dateisystem 233 umfassen.

Jeder der Overlay-Dateisystemtreiber 232 und 233 umfasst einen Dateifilter (angedeutet durch Bezugszeichen 234 für das zweite Overlay-Dateisystem 233) sowie eine dazugehörige Policy (angedeutet durch Bezugszeichen 235 für das zweite Overlay-Dateisystem 233).

Das erste Overlay-Dateisystem 232 kann durch einen OEM bereitgestellt werden, entsprechend kann die dazugehörige Policy eine OEM-Policy sein.

Das zweite Overlay-Dateisystem 233 kann durch einen Benutzer bereitgestellt werden, entsprechend kann die dazugehörige Policy eine Benutzer-Policy sein.

Die jeweilige Policy kann einem Overlay-Dateisystemtreiber (z.B. den Overlay-Dateisystemtreibern 232 und/oder 233) während eines Bootvorgangs zur Verfügung gestellt werden und anschließend durch diesen umgesetzt werden. In einigen Fällen können die jeweiligen Policies kryptographisch signiert sein, so dass sichergestellt werden kann, dass nur vertrauenswürdige Policies (bzw. Regelwerke) geladen werden.

In einigen Fällen (nicht in Fig. 2 dargestellt), kann der Dateifilter (z.B. Dateifilter 234) als separates Overlay-Dateisystem bereitgestellt werden. Dieses Dateifilter-Overlay-Dateisystem kann so konfiguriert sein, dass dieses nur Modifikationen an das unterhalb des Dateifilter-Overlay-Dateisystem angeordneten Overlay-Dateisystems übergibt, die gemäß dem Regelwerk erlaubt sind. Nicht erlaubte Modifikationen können geblockt oder protokolliert werden (z.B. in einer Log-Partition 246 wie später beschrieben). Auf diese Weise kann sichergestellt werden, dass das Dateifilter-Overlay-Dateisystem mit jeder Art von Overlay-Dateisystem zusammenarbeiten kann. Das Dateifilter-Overlay-Dateisystem könnte auch als Dateifilter mit einem konventionellen schreibbaren Dateisystem, welches unterhalb des Dateifilter-Overlay-Dateisystems angeordnet ist, fungieren.

Wird eine Datei aus einem Speicher 240 (wie weiter unten beschrieben) entnommen, so kann der erste Overlay-Dateisystemtreiber 232 und/oder der zweite Overlay-Dateisystemtreiber 233 überprüfen, ob ein Zugriff auf die jeweilige Datei gestattet ist. Das Überprüfen kann z.B. durch einen jeweiligen Dateifilter 234 erfolgen, wobei die Information, welche Zugriffe bzw. ob ein Zugriff auf eine Datei erlaubt, ist mittels eines hinterlegten Regelwerks erfolgen kann. Dieses Regelwerk wird z.B. durch eine entsprechende Policy 235 festgelegt.

Auf diese Weise kann z.B. durch ein entsprechendes Overlay-Dateisystem überprüft werden, ob auf ein darunterliegendes Dateisystem zugegriffen werden kann. In alternativen Fällen kann der Dateifilter und die dazugehörige Policy auch so bereitgestellt werden, dass diese überprüfen, ob ein Zugriff auf das jeweilig Overlay-Dateisystem erlaubt sein soll oder nicht.

Die Industrieanlage 200 kann ferner den Speicher 240 umfassen. Der Speicher 240 kann zwei ROOT-Partitionen (z.B. zwei ROOT-Dateisystempartitionen) 241 und 242 umfassen. Die Verwendung der zwei ROOT-Partitionen 241 und 242 kann zur Unterstützung eines Firmware-Updates mit Rollback-Möglichkeit zu einer Vorgängerversion ermöglichen. So kann z.B. die ROOT-Partition 241 aktiv benutzt werden, während auf die ROOT-Partition 242 ein Firmware-Update aufgespielt wird (oder umgekehrt). Ebenfalls kann z.B. die ROOT-Partition 242 aktiv verwendet werden, während auf der ROOT-Partition 241 ein Rollback zu einer Vorgängerversion der Firmware durchgeführt wird (oder umgekehrt). Diese können z.B. von einem Gerätehersteller (z.B. der Industrieanlage 200) vorgegeben werden und nur durch ein vom Gerätehersteller bereitgestelltes Firmware-Update aktualisiert werden.

Der Speicher 240 kann ferner eine OEM-Partition 243 (bzw. eine OEM-Dateisystempartition) umfassen. Dies kann eine Partition sein, welche für einen Maschinenbauer bereitgestellt (und/oder von diesem konfiguriert) wird. In dieser Partition kann z.B. die Konfiguration für den Maschinenbauer hinterlegt sein (z.B. Konfigurationsdateien, Steueranweisungen und/oder Apps).

Ferner kann der Speicher 240 eine Benutzer-Partition 244 (z.B. eine Benutzer-Dateisystempartition) umfassen. Die Benutzer-Partition 244 kann eine für den Benutzer (Betreiber bzw. Integrator) der Industrieanlage 200 vorgesehene Partition sein. In dieser Partition können die vom Benutzer (bzw. vom Integrator) erzeugten Konfigurationsdateien und/oder eingespielte Anwendungen hinterlegt sein.

In einigen Fällen können der Integrator und der Benutzer die gleiche Person sein, d.h. der Benutzer der Industrieanlage 200 kann die Industrieanlage 200 selbst implementieren bzw. in Betrieb nehmen. Alternativ kann der Integrator ein Serviceanbieter sein, welcher im Auftrag des späteren Benutzers die Industrieanlage 200 in Betrieb nimmt und konfiguriert.

Der Speicher 240 kann ferner eine home-Partition 245 (bzw. eine home-Dateisystempartition) umfassen. Dies kann eine Partition mit einem home-Verzeichnis des Benutzers (bzw. von mehreren Benutzern) sein.

Der Speicher 240 kann schließlich eine Log-Partition 246 (bzw. eine Log-Dateisystempartition) umfassen. Die Log-Partition 246 kann derart konfiguriert sein, dass diese das Ablegen von Log-Dateien (bzw. Log-Informationen) ermöglicht, wie hierin beschrieben.

Die Log-Partition 246 kann z.B. dazu benutzt werden, unzulässige Überlagerungen von Overlay-Dateisystemen (z.B. im Sinne eines unzulässigen Modifikationsversuchs einer Datei eines ROOT-Dateisystems 241 und/oder 242 durch ein Overlay-Dateisystem (243 und/oder 244)) zu protokollieren. Dies kann z.B. als Teil einer Kernel-internen Logik erfolgen und durch eine Logging-Komponente an ein dafür vorgesehenes Protokollierungssystems eines Herstellers der Industrieanlage 200 und/oder einen Benutzer und/oder Implementierer der Industrieanlage 200 geschickt werden. Dadurch können unzulässige Modifikationsoperationen erkannt und entsprechend darauf reagiert werden (z.B. durch gezielte Information eines Benutzers). Alternativ kann es auch möglich sein, unzulässige Modifikationen zwar zu erlauben, diese jedoch zu protokollieren.

Ein geloggter, unzulässiger Modifikationsversuch kann zudem in einem Platform Configuration Register (PCR) eines Trusted Platform Modules (TPM) festgehalten werden. Auf diese Weise kann z.B. mittels eines Remote Attestation Mechanismus eine durch Hardware gestützte Information bereitgestellt werden, dass ein derartiges Ereignis aufgetreten ist.

Die ROOT-Partitionen 241 und 242 können dabei durch alle anderen genannten Partitionen überlagert werden.

Die Industrieanlage 200 kann ferner einen Random-Access-Memory (RAM) 250 umfassen. Der RAM 250 kann als flüchtiger Speicher realisiert sein und schnellen Zugriff auf häufig und/oder derzeit in Benutzung befindlicher Daten bieten.

Die Industrieanlage 200 kann ferner eine Eingabe- und/oder Ausgabeeinheit 260 umfassen. Mittels der Eingabe- und/oder Ausgabeeinheit 260 kann ein Benutzer der Industrieanlage 200 mit der Industrieanlage 200 in bidirektionale Interaktion treten. So kann der Benutzer z.B. bestimmte Dateizugriffe initiieren, welche dann erfindungsgemäß ausgeführt werden, und/oder ein Regelwerk bereitstellen und/oder verwalten um einen erfindungsgemäßen Integritätsschutz auf ein erstes Dateisystem (z.B. auf zumindest eine der ROOT-Partitionen 241 und/oder 242) sicherzustellen.

Die Industrieanlage 200 kann des Weiteren eine Netzwerkschnittstelle 270 umfassen. Die Netzwerkschnittelle 270 kann als eine Kommunikationseinheit bereitgestellt werden, welche z.B. eine bidirektionale Kommunikation der Industrieanlage 200 mit der Außenwelt (z.B. über das Internet) oder eines Industrienetzwerks (z.B. über das Intranet) ermöglicht.

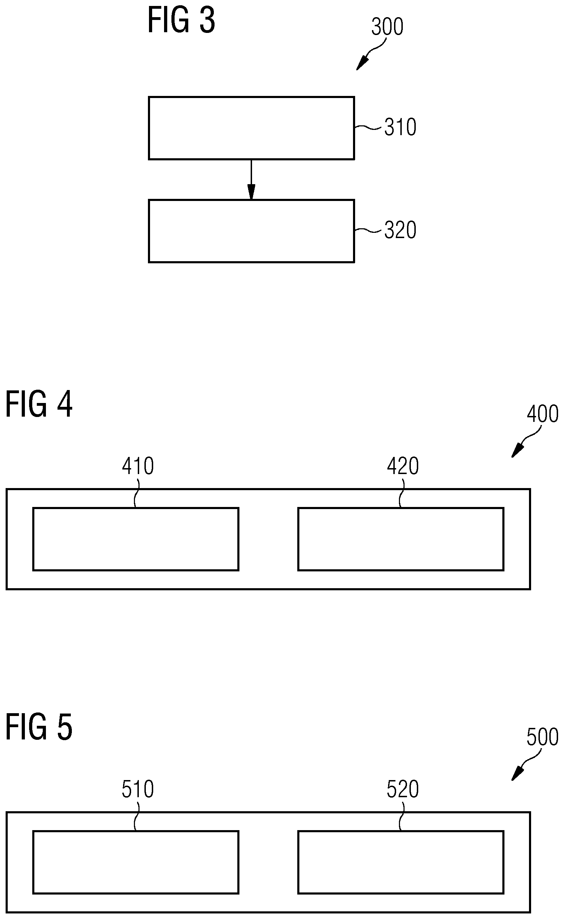

Fig. 3 zeigt ein Ablaufdiagramm eines exemplarischen Computer-implementierten Verfahrens 300 zur Zugriffskontrolle auf ein erstes Dateisystem in einer aus zumindest N, mit N ≥ 4, hierarchisch übereinander angeordneten Dateisystemen bestehenden Umgebung.

In Schritt 310 erfolgt ein Bereitstellen eines Regelwerks, welches Informationen darüber vorhält, ob eine Datei des ersten Dateisystems durch ein oberhalb des ersten Dateisystems angeordnetes zweites und/oder drittes und/oder viertes Dateisystem modifiziert werden darf.

In Schritt 320 erfolgt ein Überprüfen, zumindest teilweise basierend auf einem Abgleich mit dem Regelwerk, ob eine Modifikation einer Datei des ersten Dateisystems durch das zweite und/oder das dritte und/oder das vierte Dateisystem ausgeführt werden darf.

Fig. 4 zeigt eine exemplarische Computer-implementierte Vorrichtung 400 zum zur Zugriffskontrolle auf ein erstes Dateisystem in einer aus zumindest N, mit N ≥ 4, hierarchisch übereinander angeordneten Dateisystemen bestehenden Umgebung. Die Computer-implementierte Vorrichtung 400 umfasst eine Bereitstellungseinheit 410 sowie eine Überprüfungseinheit 420.

Die Bereitstellungseinheit 410 ist konfiguriert zum Bereitstellen eines Regelwerks, welches Informationen darüber vorhält, ob eine Datei des ersten Dateisystems durch ein oberhalb des ersten Dateisystems angeordnetes zweites und/oder drittes und/oder viertes Dateisystem modifiziert werden darf.

Die Überprüfungseinheit 420 ist konfiguriert zum Überprüfen, zumindest teilweise basierend auf einem Abgleich mit dem Regelwerk, ob eine Modifikation einer Datei des ersten Dateisystems durch das zweite und/oder das dritte und/oder das vierte Dateisystem ausgeführt werden darf.

Fig. 5 zeigt ein exemplarisches System 500 gemäß einem Aspekt der vorliegenden Erfindung. Das System 500 beinhaltet eine Computer-implementierte Vorrichtung 510 und ein Computerprogrammprodukt 520.

Die Computer-implementierte Vorrichtung 510 kann konfiguriert sein, wie hierin beschrieben.

Das Computerprogrammprodukt 520 kann konfiguriert sein, wie hierin beschrieben.

Obwohl die vorliegende Erfindung anhand von Ausführungsbeispielen beschrieben wurde, ist sie vielfältig modifizierbar.

Unabhängig vom grammatikalischen Geschlecht eines bestimmten Begriffes sind Personen mit männlicher, weiblicher oder anderer Geschlechteridentität mit umfasst.

## Patentansprüche

1. Computer-implementiertes Verfahren (300) zur Zugriffskontrolle auf ein erstes Dateisystem in einer aus zumindest N, mit N ≥ 4, angeordneten Dateisystemen bestehenden Umgebung, wobei zumindest zwei der N Dateisysteme in einer hierarchischen Anordnung zueinanderstehen, umfassend:
Bereitstellen (310) eines Regelwerks, welches Informationen darüber vorhält, ob eine Datei des ersten Dateisystems durch ein oberhalb des ersten Dateisystems angeordnetes zweites und/oder drittes und/oder viertes Dateisystem modifiziert werden darf;
Überprüfen (320), zumindest teilweise basierend auf einem Abgleich mit dem Regelwerk, ob eine Modifikation einer Datei des ersten Dateisystems durch das zweite und/oder das dritte und/oder das vierte Dateisystem ausgeführt werden darf.

2. Computer-implementiertes Verfahren nach Anspruch 1, wobei das erste Dateisystem ein ROOT-Dateisystem, bevorzugt ein Read-Only-Dateisystem, ist.

3. Computer-implementiertes Verfahren nach Anspruch 1, wobei das erste Dateisystem ein Overlay-Dateisystem, bevorzugt ein Read-Write-Dateisystem, ist.

4. Computer-implementiertes Verfahren nach einem der Ansprüche 1-3, wobei das zweite und/oder das dritte und/oder das vierte Dateisystem ein Overlay-Dateisystem ist.

5. Computer-implementiertes Verfahren nach einem der Ansprüche 1-4, wobei das zweite Dateisystem unmittelbar oberhalb des ersten Dateisystems angeordnet ist.

6. Computer-implementiertes Verfahren nach einem der Ansprüche 1-5, wobei das vierte Dateisystem unmittelbar oberhalb des dritten Dateisystems angeordnet ist; wobei das dritte Dateisystem unmittelbar oberhalb des zweiten Dateisystems angeordnet ist; und wobei das vierte Dateisystem über das dritte und das zweite Dateisystem auf das erste Dateisystem zugreift.

7. Computer-implementiertes Verfahren nach einem der Ansprüche 1-6, wobei das Bereitstellen des Regelwerks ein Bereitstellen des Regelwerks als ein Dateiattribut der Datei im ersten Dateisystem, als Konfigurationsdatei und/oder als Datenbank umfasst.

8. Computer-implementiertes Verfahren nach einem der Ansprüche 1-7, ferner umfassend:
Ausgeben einer Alarmmeldung an einen Benutzer der Umgebung, bevorzugt über eine Benutzerschnittstelle, wenn festgestellt wird, dass die Modifikation der Datei nicht ausgeführt werden darf; und/oder
Abweisen des oberhalb des ersten Dateisystem angeordneten zweiten und/oder dritten und/oder vierten Dateisystems wenn festgestellt wird, dass die Modifikation der Datei nicht ausgeführt werden darf.

9. Computer-implementiertes Verfahren nach einem der Ansprüche 1-8, wobei das erste Dateisystem ein ROOT-Dateisystem ist;
wobei das zweite Dateisystem ein home-Dateisystem ist;
wobei das dritte Dateisystem ein Original Equipment Manufacturer, OEM, -Dateisystem ist; und
wobei das vierte Dateisystem ein Benutzer-Dateisystem ist.

10. Computer-implementiertes Verfahren nach einem der Ansprüche 1-9, wobei das Regelwerk durch einen OEM-Anbieter und/oder durch einen Benutzer festgelegt wird.

11. Computer-implementiertes Verfahren nach einem der Ansprüche 1-10, ferner umfassend:
Überprüfen des Inhalts des zweiten und/oder des dritten und/oder des vierten Dateisystems, wenn das entsprechende zweite und/oder dritte und/oder vierte Dateisystem ein Overlay-Dateisystem ist, bei einem Mount-Prozess und/oder einer Aktualisierung des entsprechenden zweiten und/oder dritten und/oder vierten Dateisystems.

12. Computerprogrammprodukt, umfassend Befehle, die bei der Ausführung des Programms durch einen Computer diesen veranlassen, das Verfahren nach einem der Ansprüche 1 - 11 auszuführen.

13. Computer-implementierte Vorrichtung (400) zur Zugriffskontrolle auf ein erstes Dateisystem in einer aus zumindest N, mit N ≥ 4, angeordneten Dateisystemen bestehenden Umgebung, wobei zumindest zwei der N Dateisysteme in einer hierarchischen Anordnung zueinanderstehen, umfassend:
Eine Bereitstellungseinheit (410) zum Bereitstellen eines Regelwerks, welches Informationen darüber vorhält, ob eine Datei des ersten Dateisystems durch ein oberhalb des ersten Dateisystems angeordnetes zweites und/oder drittes und/oder viertes Dateisystem modifiziert werden darf;
Eine Überprüfungseinheit (420) zum Überprüfen, zumindest teilweise basierend auf einem Abgleich mit dem Regelwerk, ob eine Modifikation einer Datei des ersten Dateisystems durch das zweite und/oder das dritte und/oder das vierte Dateisystem ausgeführt werden darf.

14. Computer-implementierte Vorrichtung nach Anspruch 13, ferner umfassend:
eine Ausführungseinheit zum Ausführen der Verfahrensschritte des Verfahrens nach einem der Ansprüche 1-11; und/oder
eine weitere Ausführungseinheit zum Ausführen des Computerprogrammprodukts nach Anspruch 12.

15. System (500) zur Zugriffskontrolle auf ein erstes Dateisystem in einer aus zumindest N, mit N ≥ 4, hierarchisch übereinander angeordneten Dateisystemen bestehenden Umgebung, umfassend:
das Computerprogrammprodukt (510) nach Anspruch 12; und
die Computer-implementierte Vorrichtung (520) nach einem der Ansprüche 13 oder 14.
